# EUROPEAN PATENT SPECIFICATION

(11) **EP 1 732 776 B1**
(45) Date of publication and mention of the grant of the patent: **11.08.2010**
(21) Application number: 04806481.0
(22) Date of filing: 28.12.2004
(51) Int. Cl.: B60J 10/00

(54) **SUPPORT STRIPS AND METHODS**
STÜTZBÄNDER UND VERFAHREN
BANDES DE SOUTIEN ET PROCEDES

(30) Priority: 09.03.2004 GB 0405309
(43) Date of publication of application: 20.12.2006
(73) Proprietor: Henniges Automotive GmbH & Co. KG, 31547 Rehburg Loccum (DE)
(72) Inventor: KREYE, Bernhard, 31515 Wunstorf (DE)
(74) Representative: Siekmann, Gunnar
(86) International application number: PCT/IB2004/004317
(87) International publication number: WO 2005/092655

(56) References cited:
- EP-A- 0 587 428
- US-A- 4 800 681
- US-A- 5 338 087
- US-A- 6 024 906

## Description

### Field of the Invention

The invention relates to support strips for supporting window panes and to methods for supporting such panes, particularly window panes for motor vehicles.

### Background to the Invention

It is known to support window panes, particularly for vehicles using a strip that holds the window pane around the periphery of the pane. The strip may, for example, be moulded from a mouldable material. In order to provide a strip that has a satisfactory sealing performance, the strip has been made from a relatively soft material and, as a result, it has been customary to re-inforce such strips with a metal reinforcement. This complicates manufacture and increases cost.

EP-A-0 587 428 discloses a sealing strip for a window pane which is mounted to a flange of a vehicle door by a relatively rigid mounting member. Formed over that mounting member is a sealing member of relatively soft material for sealing against the window pane.

### Brief Summary of the Invention

According to a first aspect of the invention, there is provided a support strip for supporting a window pane as defined in claim 1.

According to a second aspect of the invention, there is provided a method of supporting a window pane as defined in claim 31.

### Brief Description of the Drawings

The following is a more detailed description of some embodiments of the invention, by way of example, reference being made to the accompanying drawings in which:-
Figure 1 is a side view of a first motor vehicle with a rear quarter light window pane circled,
Figure 2 is a schematic side elevation of a support strip for supporting the quarter light window pane of Figure 1,
Figure 3 is a section on the line III-III of Figure 2,
Figure 4 is section on the line IV-IV of Figure 2,
Figure 5 is a section on the line of V-V of Figure 2,
Figure 6 is a side view of a second motor vehicle showing a rear side window separate from the rear door,
Figure 7 is a section on the line VII-VII or Figure 6, and,
Figure 8 is a section on the line of VIII-VIII of Figure 6.

### Detailed Description of Mode of Carrying out the Invention

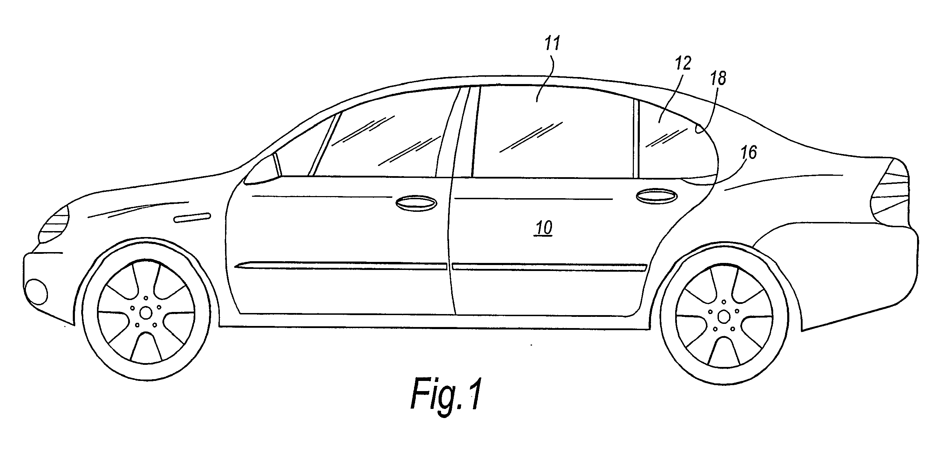

Referring first to Figure 1, the first motor vehicle has a rear door 10 provided with a first window pane 11 that can be moved downwardly and upwardly into an out of the door 10 either manually or electrically as is well known. The door 10 also carries a fixed second quarter light window pane 12.

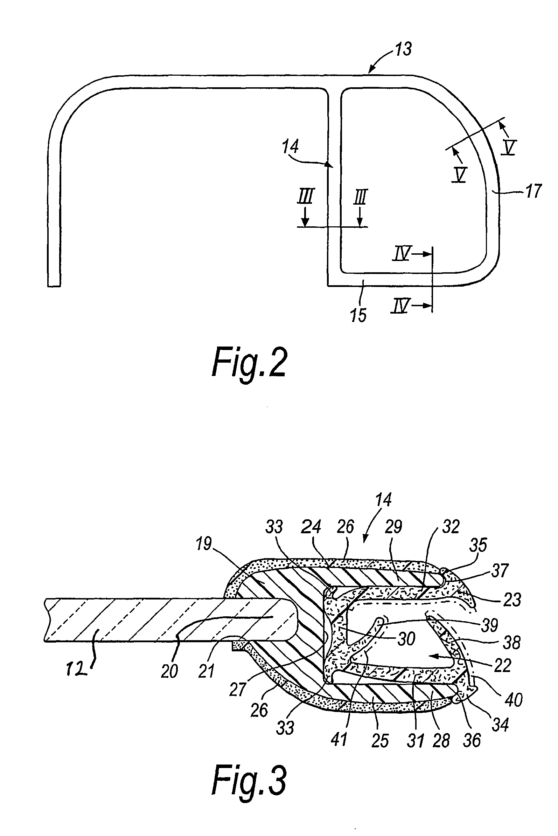

The first and second panes 11, 12 are mounted in the rear door 10 by a support strip 13 shown schematically in Figure 2. The support strip 13 is formed with a first portion 14 that separates the first window pane 11 from the second window pane 12. This is followed by a second portion 15 that supports the second window pane 12 at the waist 16 of the door 10 and by a third portion 17 that supports the second window pane 12 around the curved rear edge of the door 18.

Referring next to Figure 3, the first portion 14 of the support strip 13 is formed by an un-reinforced length of harder material 19 moulded around the associated edge 20 of the second window pane 12. The harder material 19 thus forms a first channel 21 that receives this edge 20. This channel 21 is integral with the rest of the hard material 19. During the moulding the harder material 19 is also formed with a second channel 22 opening in a direction opposite to the first channel and holding a separately formed seal 23 that will be described in more detail below. After the harder material 19 has been moulded around the second window pane 12, the external surfaces of the harder material 19 are over-moulded with a softer material 26. The softer material 26 has an attractive appearance and is seen from the outside and the inside of the motor vehicle.

The second channel 22 is generally U-shaped with a base 27 and first and second upstanding limbs 28, 29. The seal 23 contained within the second channel 22 is for engaging the first movable window pane 11. The seal 23 is moulded from a flexible material (or may be formed by extrusion) and has a generally U-shaped cross-section with a base 30 and first and second limbs 31, 32. A pair of flanges 33 project from respective opposite ends of the base 30 and engage in the second channel 22 to hold the seal 23 in the second channel 22.

The first limb 31 and the second limb 32 terminate at their free ends in respective flanges 34, 35 that cover respective ends 36, 37 of the limbs 28, 29 of the second channel 22. The first limb 31 of the seal 23 carries two inwardly projecting lips 38, 39. The first lip 38 is located toward the free end of the first limb 31 and the second lip 39 is located at the junction between the first limb 31 and the base 30. Both lips 38, 39 have flocked surfaces 40, 41 for engagement with an edge of the first window pane 11.

The softer material 26 is moulded onto or bonded to the window pane 12. The softer mataerial 26 extends over the entire visible surface of the harder material 19 (when the seal 23 is mounted thereto). The softer material 26 extends up to and may abut the flanges 34 and 35 of the seal 23.

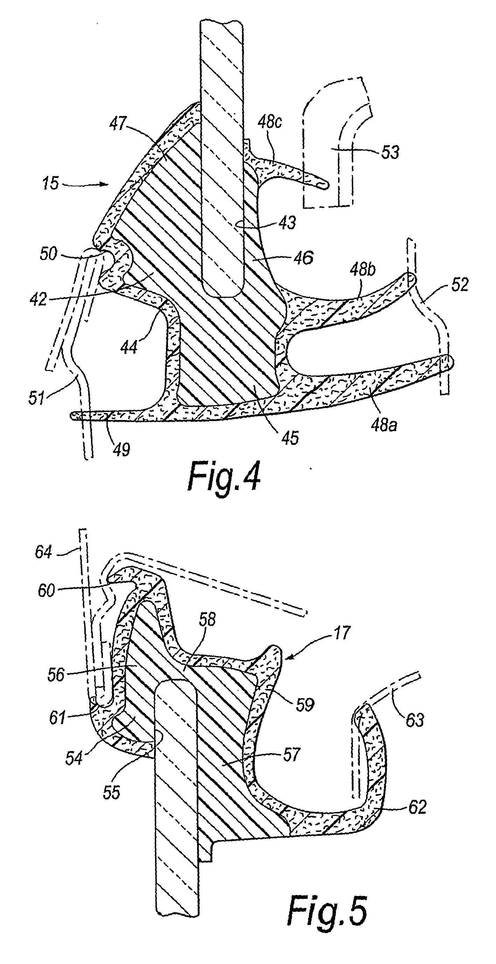

Referring next to Figure 4, the second portion 15 is formed by a length of un-reinforced harder material 42 moulded around the associated edge of the second quarter light pane 12 so holding the edge of the second quarter light pane 12 in a channel 43. The harder material 42 is generally U-shaped with a base 45 and limbs 46, 47. A softer material 44 is next moulded around the harder material 42 and is provided with lips and recesses described in more detail below.

First, the softer material 44 is moulded to provide three flanges 48a, 48b, 48c extending from the first limb 46 of the harder material 42. The flanges 48a,48b and 48c are formed entirely from the softer material 44. One flange 48a is located adjacent to base, another flange 48b is located intermediate ends of the limb 46 and the third flange 48c projects from the free end of the limb 46. The softer material 44 is also formed with a flange 49 projecting from the second limb 47 of the harder material 42 at the base 45 of the harder material 42. The flange 49 is formed entirely from the softer material 44. In addition, intermediate the ends of the second limb 47, the softer material 44 is moulded to provide a recess 50. As seen in Figure 4, the flanges 48a, 48b, 48c and 49 and the recess 50 mount the second portion 15 between an outer door panel 51 and an inner door panel 52 as well as engaging it with an interior trim 53.

Referring next to Figure 5, the third portion 17 comprises a body of un-reinforced harder material 54 moulded around the associated edge of the second quarter light pane 12 so that the edge of the quarter light pane 12 is held in a channel 55 in the harder material 54. Again, the harder material 54 is generally U-shaped with first and second limbs 56, 57 connected by a base 58. A softer material 59 is then moulded around the harder material. The moulding provides the softer material 59 with two spaced lips 60, 61 projecting outwardly from the first limb 56 (and formed entirely of the softer material 59). The first lip 60 is adjacently the base 58 and the second lip 61 is adjacent the free end of the first limb 56. In addition, the softer material 59 provides an L-shaped lip 62 (formed entirely of softer material 59) extending outwardly of the second limb 57 adjacent the free end of the second limb 57. These lips 60, 61, 62 allow the third portion 17 to be mounted on a portion 63 of the rear door 10 and to engage a portion 64 of the door frame formed in the car body.

The first portion 14, second portion 15 and third portion 17 (or any two of them) are moulded in separate moulding operations, and those parts are subsequently moulded together and the softer material is formed in a single moulding operation. The single moulding operation to form the softer moulding may provide an attractive, join-free appearance to the support strip 13.

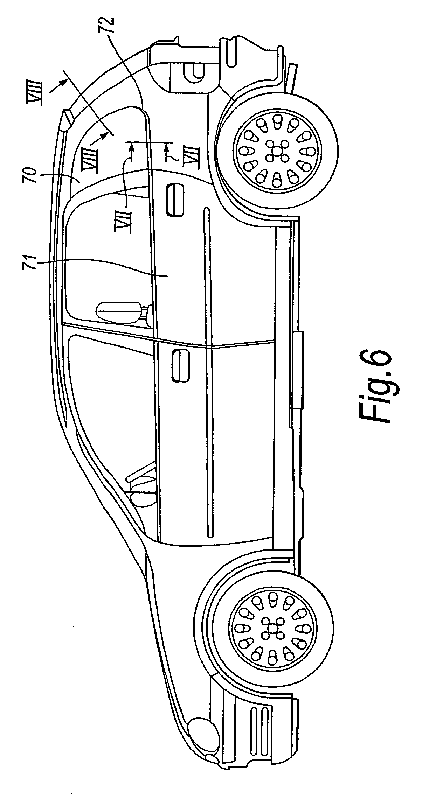

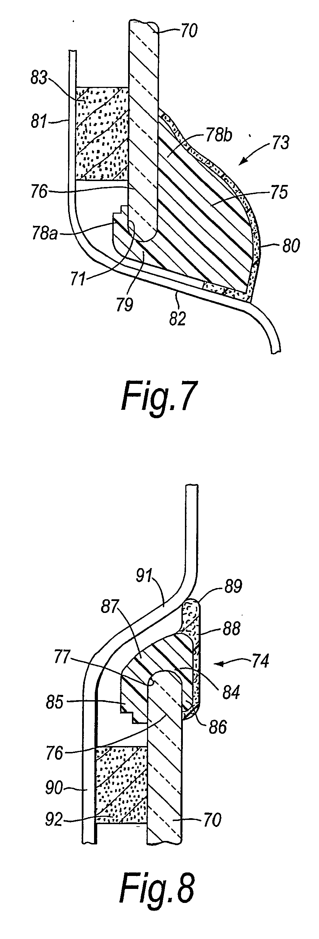

Referring next to Figures 6, 7 and 8, the second motor vehicle has a fixed rear side window pane 70 in the body of the vehicle separate from the rear door 71. The window pane 70 is mounted on the body of the vehicle by a support strip indicated generally at 72. The support strip 72 includes a first portion 73, shown in Figure 7, and a second portion 74, shown in Figure 8.

The first portion 73 of the support strip 72 comprises an un-reinforced length of a harder material 75 moulded around the associated edge 76 of the window pane 70.

The harder material 75 thus forms a channel 71 that receives this edge 76. The harder material 75 is of generally U-shaped cross-section (see Figure 7) with a shorter limb 78a and a longer limb 78b connected by a base 79. The longer limb 78a is significantly thicker than the shorter limbs 78b with a curved exterior surface. A softer material 80 is mounted over this exterior surface and around a portion of the exterior surface of the base 79.

In use, this portion 73 of the support strap 72 is mounted at the waist of the motor vehicle where the vehicle body is provided with an L-shaped edge having a vertical portion 81 and a horizontal portion 82. The base 79 of the first portion 73 is located on the horizontal portion 82 and the window pane 70 is glued to the vertical portion 81 using an adhesive or a double sided adhesive tape 83. The softer material 80 thus forms the visible exterior surface of the support strip 72 and the portion of the softer material 80 on the base 79 provides a seal against the vehicle body.

The second portion 74 of the support strip 72 comprises an un-reinforced length of a harder material 84 moulded around the associated edge 76 of the window pane 70. The harder material 84 thus forms a channel 77 that receives this edge 76. The harder material 84 is of generally U-shaped cross-section (see Figure 8) with first and second limbs 85, 86 of generally equal length interconnected by a base 87. A softer material 88 is moulded over an exterior surface of the second limb 86 and, at the base 87, extends beyond the limb 85 to form a lip 89 (formed entirely of softer material 88).

In use, the second portion 74 of the support strip 72 is mounted around a curved portion of the body of the motor vehicle extending upwardly from the waist and curving towards the front of the vehicle until it reaches the rear door aperture. This portion of the vehicle body is formed with an L-shaped edge having a vertical portion 90 and an inwardly and upwardly projection portion 91. The window pane 70 is adhered to the vertical portion 90 using an adhesive or a double sided adhesive tape 92. The softer material 88 thus forms the visible exterior surface of the support strip 72 and the lip 89 provides a seal against the vehicle body.

The support strip 72 may be formed in any of the ways described above with reference to Figures 1 to 5.

In any of the embodiments described above with reference to the drawings the harder material preferably has a Shore D-hardness of 40 and may, for example, be polypropylene. The softer material may have a Shore A-hardness of 60 and may be formed from a thermoplastic elastomer. Alternatively the harder material and/or the softer material may be formed of EPDM. Further alternatively, the harder material and/or softer material may be PVC (polyvinyl chloride).

It will be appreciated that the arrangement of the support strip 13 need not be exactly as described above. More or less lips may be provided and more or less recesses may be provided. The number of lips and recesses will usually be determined by the configuration of the door with which the support strip 13 is designed to co-operate. The glass of the second quarter light pane 12 and the fixed rear side window pane 70 may be secured to the harder material and/or the softer material by an adhesive or other bonding material (not shown). The adhesive (or other bonding material may be applied to the glass pane 12, 70 prior to the moulding of the harder and/or softer material to bond with that material when formed. Alternatively, the adhesive may be applied to the material and/or glass after the material has been formed, to secure the material to the glass. Further alternatively, the glass may be secured to the material by the moulding operation along forming a bond between the material and the glass, or by frictional engagement between the material and the glass.

## Claims

1. A support strip (13) for supporting a window pane (11,12) comprising a plurality of un-reinforced parts of moulded harder material (19,42,54,75,84) including a channel (21,22) for receiving the window pane (11,12) and having an external surface covered with a softer material (26,44,59,80,88) moulded over the harder (19) material, **characterised by** a single part of the softer material (26,44,59,80,88) being moulded over said plurality of parts of the harder material (19,42,54,75,84).

2. A strip according to claim 1 and including a portion for supporting first (12) and second (11) window panes, the harder material (19) having first (21) and second (22) oppositely facing channels for receiving respective window panes (11,12) and having external surfaces between the channels (21,22) covered with a softer material (26) moulded over the harder material (19).

3. A strip according to claim 2 wherein the second channel (22) carries a separately formed seal (23) of flexible material, the first window pane (12) being received in said seal (23).

4. A strip according to claim 3 wherein the seal (23) includes flocked pane-engaging surfaces (40,41).

5. A strip according to claim 3 or claim 4 wherein said first channel (21) is generally U-shaped in cross-section and said seal (23) includes a body of generally U-shaped cross-section received in the second channel (22).

6. A strip according to claim 5 wherein the seal (23) includes a base (30) and a pair of flanges (33) projecting from respective opposite ends of said base (27) and engaging with the second channel (22) to hold the seal (23) in the second channel (22).

7. A strip according to claim 5 or claim 6 wherein the seal (23) includes two limbs (31,32) forming the arms of said U-shaped cross-section, each limb (31,32) terminating in a respective flange (34,35) that covers an end of an associated limb (28,29) of the second channel (22).

8. A strip according to claim 7 wherein one of said limbs (31,32) of the seal (23) include at least one lip (38,39) projecting inwardly of the U-section seal, said lips (38,39) a flocked surface (40,41) for engagement with the associated window pane (11).

9. A strip according to claim 8 wherein two lips are provided, one lip (38) being towards the free end of the associated limb (31) of the seal (23) and the other lip (39) being towards the base (30) of the seal (23).

10. A strip according to claim 8 or claim 9 wherein the other limb (32) of the seal (23) has a flocked interior surface.

11. A strip according to any one of claims 1 to 10 wherein the first channel (21) engages the first window pane (12) directly.

12. A strip according to claim 10 wherein the first window pane (12) is fixed and, in use, is glued to the strip (23).

13. A strip according to claim 1 and including a portion in which the softer material (26,44,59,80,88) is formed to provide at least one frame-engaging member (48a,48b,48c,49,50,60,61,62) extending therealong.

14. A strip according to claim 13 wherein the frame-engaging member is a lip.

15. A strip according to claim 14 wherein the frame-engaging member is a recess.

16. A strip according to any one of claims 13 to 15 wherein said harder material (19,42,54,75,84) of said portion is of generally U-shaped cross-section with spaced first and second limbs interconnected by a base, the channel being formed between said limbs and said softer material being moulded around exterior surfaces of said limbs and base.

17. A strip according to claim 16 wherein the softer material (26,44,59,80,88) forms three spaced lips extending outwardly of the first limb.

18. A strip according to claim 16 or claim 17 wherein the softer material (26,44,59,80,88) forms a lip extending outwardly of the second limb adjacent the base and a recess located intermediate the ends of the second limb.

19. A strip according to claim 16 wherein the softer material (26,44,59,80,88) forms two spaced lips extending outwardly of the first lip.

20. A strip according to claim 19 wherein the softer material (26,44,59,80,88) forms a single lip extending outwardly of the second limb adjacent the free end of the second limb.

21. A strip according to anyone of claims 1 to 20 wherein the hard material (19,42,54,75,84) has a Shore D hardness of 40.

22. A strip according to anyone of claims 1 to 21 wherein the harder material (19,42,54,75,84) is polypropylene.

23. A strip according to any one of claims 1 to 22 wherein the softer material (26,44,59,80,88) has a Shore A hardness of 60.

24. A strip according to anyone of claims 1 to 23 wherein the softer material (26,44,59,80,88) is a thermoplastic elastomer.

25. A strip according to any one of claims 1 to 24, wherein the harder material (19,42,54,75,84) and/or the softer material (26,44,59,80,88) are formed of PVC.

26. A support strip according to any of claims 1 to 25 in combination with a window pane received in the strip.

27. A support strip according to any one of claims 1 to 26 wherein the window pane is a motor vehicle window pane.

28. A support strip according to claim 27 wherein the window pane is a door mounted quarter light.

29. A support strip according to claim 27 wherein the window pane is fixed in the body of the motor vehicle.

30. A motor vehicle including a support strip according to any one of claims 1 to 29.

31. A method of supporting a window pane (12) comprising moulding a plurality of un-reinforced parts of harder material (19,42,54,75,84) around a peripheral edge of said window pane (12) so that the pane (12) is received in a channel (21) of the harder material (19,42,54,75,84) and then moulding a softer material (26,44,59,80,88) over external surfaces of the harder material (19,42,54,75,84), **characterised in that** the step of moulding the softer material comprises moulding a single part of the softer material (26,44,59,80,88) over said plurality of parts of the harder material (19,42,54,75,84)

32. A method according to claim 31 and comprising providing a portion of the harder material (19,42,54,75,84) with a second channel (22) for receiving a second pane (11).

33. A method according to claim 31 or claim 32 and comprising forming a portion of the softer material (26,44,59,80,88) with at least one lip (48a,48b,48c,49,50,60,61,62) for engaging an associated frame.

34. A method according to anyone of claims 31 to 33 and comprising forming a portion of the softer material (26,44,59,80,88) with at least one recess (48a,48b,48c,49,50,60,61,62) for engaging and associated from.

35. A method according to anyone of claims 31 to 34 wherein the hard material (19,42,54,75,84) has a Shore D hardness of 40.

36. A method according to anyone of claims 31 to 35 wherein the harder material (19,42,54,75,84) is polypropylene.

37. A method according to any one of claims 31 to 36 wherein the softer material (26,44,59,80,88) has a Shore A hardness of 60.

38. A method according to anyone of claims 31 to 37 wherein the softer material (26,44,59,80,88) is a thermoplastic elastomer.

39. A method according to any one of claims 31 to 38 wherein said window pane (12) is a motor vehicle window pane.

40. A method according to claim 39 wherein a support strip according to claim 27 wherein the window pane (12) is a door mounted quarter light.

41. A method according to claim 39 wherein a support strip according to claim 27 wherein the window pane (12) is fixed in the body of the motor vehicle.

42. A method according to a claim 40 or 41 and comprising the further step of connecting the window pane (12) to a body of a motor vehicle.

43. A method according to claim 42 wherein the window pane (12) is connected to the body of the motor vehicle by members (48a,48b,48c,49,50,60,61,62) formed by the softer material (26,44,59,80,88) and engaging the body.

44. A method according to claim 43 wherein the members (48a,48b,48c,49,50,60,61,62) comprise at least one lip and/or at least one recess.

45. A method according to claim 42 wherein the window pane (12) is connected to the body of the motor vehicle by adhesive means acting between the window pane and the body.

46. A method according to any one of claims 31 to 45 wherein the harder material (19,42,54,75,84) and/or the softer material (26,44,59,80,88) are formed of PVC.

47. The strip or method of any one of the preceding claims wherein the softer material (26,44,59,80,88) is moulded or bonded to the window pane (12).

## Patentansprüche

1. Halteleiste (13) zum Halten einer Fensterscheibe (11, 12), umfassend eine Mehrzahl von unverstärkten Teilen aus geformtem härterem Material (19, 42, 54, 75, 84), das einen Kanal (21, 22) zur Aufnahme der Fensterscheibe (11, 12) umfasst und eine Außenfläche aufweist, die mit einem weicheren Material (26, 44, 59, 80, 88) überzogen ist, das über das härtere Material (19) geformt ist, **gekennzeichnet durch** einen einzelnen Teil des weicheren Materials (26, 44, 59, 80, 88), das über die Mehrzahl von Teilen des härteren Materials (19, 42, 54, 75, 84) geformt ist.

2. Leiste nach Anspruch 1 und umfassend einen Abschnitt zum Halten von ersten (12) und zweiten (11) Fensterscheiben, wobei das härtere Material (19) erste (21) und zweite (22) einander gegenüberliegende Kanäle zur Aufnahme von jeweiligen Fensterscheiben (11, 12) aufweist und Außenflächen zwischen den Kanälen (21, 22) aufweist, die mit einem weicheren Material (26) überzogen sind, das über das härtere Material (19) geformt ist.

3. Leiste nach Anspruch 2, wobei der zweite Kanal (22) eine separat ausgebildete Dichtung (23) aus flexiblem Material trägt und die erste Fensterscheibe (12) in der Dichtung (23) aufgenommen ist.

4. Leiste nach Anspruch 3, wobei die Dichtung (23) beflockte Scheibeneingriffsflächen (40, 41) umfasst.

5. Leiste nach Anspruch 3 oder 4, wobei der erste Kanal (21) im Allgemeinen einen U-förmigen Querschnitt aufweist und die Dichtung (23) einen Körper von im Allgemeinen U-förmigem Querschnitt umfasst, der im zweiten Kanal (22) aufgenommen ist.

6. Leiste nach Anspruch 5, wobei die Dichtung (23) eine Basis (30) und ein Paar Flansche (33) umfasst, die von jeweiligen gegenüberliegenden Enden der Basis (27) vorstehen und in den zweiten Kanal (22) eingreifen, um die Dichtung (23) im zweiten Kanal (22) zu halten.

7. Leiste nach Anspruch 5 oder 6, wobei die Dichtung (23) zwei Glieder (31, 32) umfasst, welche die Arme des U-förmigen Querschnitts bilden, wobei jedes Glied (31, 32) in einem jeweiligen Flansch (34, 35) endet, der ein Ende eines zugehörigen Gliedes (28, 29) des zweiten Kanals (22) abdeckt.

8. Leiste nach Anspruch 7, wobei eines der Glieder (31, 32) der Dichtung (23) wenigstens eine Lippe (38, 39) umfasst, die von der U-Schnitt-Dichtung nach innen vorsteht, wobei die Lippen (38, 39) eine beflockte Oberfläche (40, 41) zum Eingriff in die zugehörige Fensterscheibe (11) umfassen.

9. Leiste nach Anspruch 8, wobei zwei Lippen vorgesehen sind, wobei eine Lippe (38) in Richtung des freien Endes des zugehörigen Gliedes (31) der Dichtung (23) ist und die andere Lippe (39) in Richtung der Basis (30) der Dichtung (23) ist.

10. Leiste nach Anspruch 8 oder 9, wobei das andere Glied (32) der Dichtung (23) eine beflockte Innenfläche aufweist.

11. Leiste nach einem der Ansprüche 1 bis 10, wobei der erste Kanal (21) direkt in die erste Fensterscheibe (12) eingreift.

12. Leiste nach Anspruch 10, wobei die erste Fensterscheibe (12) fixiert ist und bei Verwendung an die Leiste (23) geklebt ist.

13. Leiste nach Anspruch 1 und umfassend einen Abschnitt, bei welchem das weichere Material (26, 44, 59, 80, 88) ausgebildet ist, um wenigstens ein Rahmeneingriffselement (48a, 48b, 48c, 49, 50, 60, 61, 62) bereitzustellen, das sich daran entlang erstreckt.

14. Leiste nach Anspruch 13, wobei das Rahmeneingriffselement eine Lippe ist.

15. Leiste nach Anspruch 14, wobei das Rahmeneingriffselement eine Aussparung ist.

16. Leiste nach einem der Ansprüche 13 bis 15, wobei das härtere Material (19, 42, 54, 75, 84) des Abschnitts einen im Allgemeinen U-förmigen Querschnitt mit beabstandeten ersten und zweiten Gliedern aufweist, die durch eine Basis miteinander verbunden sind, wobei der Kanal zwischen den Gliedern ausgebildet ist und das weichere Material um Außenflächen der Glieder und der Basis geformt ist.

17. Leiste nach Anspruch 16, wobei das weichere Material (26, 44, 59, 80, 88) drei beabstandete Lippen bildet, die sich vom ersten Glied nach außen erstrecken.

18. Leiste nach Anspruch 16 oder 17, wobei das weichere Material (26, 44, 59, 80, 88) eine Lippe, die sich vom zweiten Glied benachbart zur Basis nach außen erstreckt, und eine Aussparung bildet, die sich zwischen den Enden des zweiten Gliedes befindet.

19. Leiste nach Anspruch 16, wobei das weichere Material (26, 44, 59, 80, 88) zwei beabstandete Lippen bildet, die sich von der ersten Lippe nach außen erstrecken.

20. Leiste nach Anspruch 19, wobei das weichere Material (26, 44, 59, 80, 88) eine einzige Lippe bildet, die sich vom zweiten Glied benachbart zum freien Ende des zweiten Gliedes nach außen erstreckt.

21. Leiste nach einem der Ansprüche 1 bis 20, wobei das harte Material (19, 42, 54, 75, 84) eine Shore-Härte D von 40 aufweist.

22. Leiste nach einem der Ansprüche 1 bis 21, wobei das härtere Material (19, 42, 54, 75, 84) Polypropylen ist.

23. Leiste nach einem der Ansprüche 1 bis 22, wobei das weichere Material (26, 44, 59, 80, 88) eine Shore-Härte A von 60 aufweist.

24. Leiste nach einem der Ansprüche 1 bis 23, wobei das weichere Material (26, 44, 59, 80, 88) ein thermoplastisches Elastomer ist.

25. Leiste nach einem der Ansprüche 1 bis 24, wobei das härtere Material (19, 42, 54, 75, 84) und/oder das weichere Material (26, 44, 59, 80, 88) aus PVC gebildet sind.

26. Halteleiste nach einem der Ansprüche 1 bis 25 in Kombination mit einer Fensterscheibe, die in der Leiste aufgenommen ist.

27. Halteleiste nach einem der Ansprüche 1 bis 26, wobei es sich bei der Fensterscheibe um die Fensterscheibe eines Motorfahrzeugs handelt.

28. Halteleiste nach Anspruch 27, wobei es sich bei der Fensterscheibe um ein in der Tür montiertes Dreiecksfenster handelt.

29. Halteleiste nach Anspruch 27, wobei die Fensterscheibe in der Karosserie des Motorfahrzeugs fixiert ist.

30. Motorfahrzeug, umfassend eine Halteleiste nach einem der Ansprüche 1 bis 29.

31. Verfahren zum Halten einer Fensterscheibe (12), umfassend ein Formen einer Mehrzahl von unverstärkten Teilen aus härterem Material (19, 42, 54, 75, 84) um eine Umfangskante der Fensterscheibe (12), so dass die Fensterscheibe (12) in einem Kanal (21) des härteren Materials (19, 42, 54, 75, 84) aufgenommen wird, und anschließendes Formen eines weicheren Materials (26, 44, 59, 80, 88) über Außenflächen des härteren Materials (19, 42, 54, 75, 84), **dadurch gekennzeichnet, dass** der Schritt des Formens des weicheren Materials (26, 44, 59, 80, 88) ein Formen eines einzigen Teils über die Mehrzahl von Teilen des härteren Materials (19, 42, 54, 75, 84) umfasst.

32. Verfahren nach 31 und umfassend ein Versehen eines Abschnitts des härteren Materials (19, 42, 54, 75, 84) mit einem zweiten Kanal (22) zur Aufnahme einer zweiten Scheibe (11).

33. Verfahren nach Anspruch 31 oder 32 und umfassend ein Ausbilden eines Abschnitts des weicheren Materials (26, 44, 59, 80, 88) mit wenigstens einer Lippe (48a, 48b, 48c, 49, 50, 60, 61, 62) zum Eingreifen in einen zugehörigen Rahmen.

34. Verfahren nach Anspruch 31 bis 33 und umfassend ein Ausbilden eines Abschnitts des weicheren Materials (26, 44, 59, 80, 88) mit wenigstens einer Aussparung (48a, 48b, 48c, 49, 50, 60, 61, 62) zum Eingreifen in einen zugehörigen Rahmen.

35. Verfahren nach einem der Ansprüche 31 bis 34, wobei das harte Material (19, 42, 54, 75, 84) eine Shore-Härte D von 40 aufweist.

36. Verfahren nach einem der Ansprüche 31 bis 35, wobei das härtere Material (19, 42, 54, 75, 84) Polypropylen ist.

37. Verfahren nach einem der Ansprüche 31 bis 36, wobei das weichere Material (26, 44, 59, 80, 88) eine Shore-Härte A von 60 aufweist.

38. Leiste nach einem der Ansprüche 31 bis 37, wobei das weichere Material (26, 44, 59, 80, 88) ein thermoplastisches Elastomer ist.

39. Verfahren nach einem der Ansprüche 31 bis 38, wobei es sich bei der Fensterscheibe (12) um die Fensterscheibe eines Motorfahrzeugs handelt.

40. Verfahren nach Anspruch 39, wobei ein Haltestreifen nach Anspruch 27, wobei es sich bei der Fensterscheibe (12) um ein in der Tür montiertes Dreiecksfenster handelt.

41. Verfahren nach Anspruch 39, wobei ein Haltestreifen nach Anspruch 27, wobei die Fensterscheibe (12) in der Karosserie des Motorfahrzeugs fixiert ist.

42. Verfahren nach Anspruch 40 oder 41 und umfassend den weiteren Schritt des Verbindens der Fensterscheibe (12) mit einer Karosserie eines Motorfahrzeugs.

43. Verfahren nach Anspruch 42, wobei die Fensterscheibe (12) durch Elemente (48a, 48b, 48c, 49, 50, 60, 61, 62), die durch das weichere Material (26, 44, 59, 80, 88) gebildet sind und in die Karosserie eingreifen, mit der Karosserie des Motorfahrzeugs verbunden wird.

44. Verfahren nach Anspruch 43, wobei die Elemente (48a, 48b, 48c, 49, 50, 60, 61, 62) wenigstens eine Lippe und/oder wenigstens eine Aussparung umfassen.

45. Verfahren nach Anspruch 42, wobei die Fensterscheibe (12) durch Klebemittel, die zwischen der Fensterscheibe und der Karosserie wirken, mit der Karosserie des Motorfahrzeugs verbunden wird.

46. Verfahren nach einem der Ansprüche 31 bis 45, wobei das härtere Material (19, 42, 54, 75, 84) und/oder das weichere Material (26, 44, 59, 80, 88) aus PVC gebildet sind.

47. Leiste oder Verfahren nach einem der vorhergehenden Ansprüche, wobei das weichere Material (26, 44, 59, 80,8 8) an die Fensterscheibe (12) geformt oder geklebt ist bzw. wird.

## Revendications

1. Bande de support (13) pour soutenir une vitre (11, 12) comprenant une pluralité de pièces non renforcées de matériau moulé plus dur (19, 42, 54, 75, 84) comprenant un canal (21, 22) pour recevoir la vitre (11, 12) et comprenant une surface extérieure recouverte d'un matériau plus tendre (26, 44, 59, 80, 88) moulé sur le matériau plus dur (19), **caractérisé par** une pièce unique de matériau plus tendre (26, 44, 59, 80, 88) qui est moulée sur ladite pluralité de pièces en matériau plus dur (19, 42, 54, 75, 84).

2. Bande selon la revendication 1 et comprenant une partie pour soutenir les première (12) et deuxième (11) vitres, le matériau plus dur (19) présentant des premier (21) et deuxième (22) canaux se faisant face pour recevoir les vitres (11, 12) respectives et présentant des surfaces extérieures entre les canaux (21, 22) recouvertes d'un matériau plus tendre (26) moulé sur le matériau plus dur (19).

3. Bande selon la revendication 2 dans laquelle le deuxième canal (22) porte un joint formé de manière séparée en matériau flexible (23), la première vitre (12) étant reçue dans ledit joint (23).

4. Bande selon la revendication 3 dans laquelle le joint (23) comprend des surfaces d'engagement de vitre floquées (40, 41).

5. Bande selon la revendication 3 ou 4 dans laquelle ledit premier canal (21) a une section transversale généralement en U et ledit joint (23) comprend un corps avec une section transversale généralement en U reçu dans le deuxième canal (22).

6. Bande selon la revendication 5 dans laquelle le joint (23) comprend une base (30) et une paire de brides (33) faisant saillie des extrémités opposées respectives de ladite base (27) et s'engageant avec le deuxième canal (22) pour maintenir le joint (23) dans le deuxième canal (22).

7. Bande selon la revendication 5 ou 6 dans laquelle le joint (23) comprend deux membres (31, 32) formant les bras de ladite section transversale en U, chaque membre (31, 32) se terminant dans une bride respective (34, 35) qui couvre une extrémité d'un membre associé (28, 29) du deuxième canal (22).

8. Bande selon la revendication 7 dans laquelle l'un desdits membres (31, 32) du joint (23) comprend au moins une lèvre (38, 39) faisant saillie vers l'intérieur du joint à section en U, lesdites lèvres (38,39) présentant une surface floquée (40, 41) destinée à s'engager avec la vitre associée (11).

9. Bande selon la revendication 8 dans laquelle deux lèvres sont prévues, une lèvre (38) étant en direction de l'extrémité libre du membre associé (31) du joint (23) et l'autre lèvre (39) étant en direction de la base (30) du joint (23).

10. Bande selon la revendication 8 ou 9 dans laquelle l'autre membre (32) du joint (23) présente une surface intérieure floquée.

11. Bande selon l'une des revendications 1 à 10 dans laquelle le premier canal (21) engage directement la première vitre (12).

12. Bande selon la revendication 10 dans laquelle la première vitre (12) est fixe et en utilisation, est collée à la bande (23).

13. Bande selon la revendication 1 et comprenant une partie dans laquelle le matériau plus tendre (26, 44, 59, 80, 88) est formé pour fournir au moins un membre d'engagement de cadre (48a, 48b, 48c, 49, 50, 60, 61, 62) s'étendant le long de celui-ci.

14. Bande selon la revendication 13 dans laquelle le membre d'engagement de cadre est une lèvre.

15. Bande selon la revendication 14 dans laquelle le membre d'engagement de cadre est un creux.

16. Bande selon l'une quelconque des revendications 13 à 15 dans laquelle ledit matériau plus dur (19, 42, 54, 75, 84) de ladite partie a une section transversale généralement en U avec des premier et deuxième membres espacés interconnectés par une base, le canal étant formé entre lesdits membres et ledit matériau plus tendre moulé autour des surfaces extérieures desdits membres et de ladite base.

17. Bande selon la revendication 16 dans laquelle le matériau plus tendre (26, 44, 59, 80, 88) forme trois lèvres espacées s'étendant vers l'extérieur du premier membre.

18. Bande selon la revendication 16 ou 17 dans laquelle le matériau plus tendre (26, 44, 59, 80, 88) forme une lèvre s'étendant vers l'extérieur du deuxième membre de manière adjacente à la base et un creux situé entre les extrémités du deuxième membre.

19. Bande selon la revendication 16 dans laquelle le matériau plus tendre (26, 44, 59, 80, 88) forme deux lèvres espacées s'étendant vers l'extérieur de la première lèvre.

20. Bande selon la revendication 19 dans laquelle le matériau plus tendre (26, 44, 59, 80, 88) forme une lèvre unique s'étendant vers l'extérieur du deuxième membre de manière adjacente à l'extrémité libre du deuxième membre.

21. Bande selon l'une quelconque des revendications 1 à 20 dans laquelle le matériau plus dur (19, 42, 54, 75, 84) a une dureté Shore D de 40.

22. Bande selon l'une quelconque des revendications 1 à 21 dans laquelle le matériau plus dur (19, 42, 54, 75, 84) et du polypropylène.

23. Bande selon l'une quelconque des revendications 1 à 22 dans laquelle le matériau plus tendre (26, 44, 59, 80, 88) a une dureté Shore D de 60.

24. Bande selon l'une quelconque des revendications 1 à 23 dans laquelle le matériau plus tendre (26, 44, 59, 80, 88) est de l'élastomère thermoplastique.

25. Bande selon l'une quelconque des revendications 1 à 24 dans laquelle le matériau plus dur (19, 42, 54, 75, 84) et/ou le matériau plus tendre (26, 44, 59, 80, 88) sont formés de PVC.

26. Bande de support selon l'une quelconque des revendications 1 à 25 en combinaison avec une vitre reçue dans la bande.

27. Bande de support selon l'une quelconque des revendications 1 à 26 dans laquelle la vitre est une vitre d'un véhicule à moteur.

28. Bande de support selon la revendication 27 dans laquelle la vitre est une vitre de custode montée dans la portière.

29. Bande de support selon la revendication 27 dans laquelle la vitre est fixée dans le corps du véhicule à moteur.

30. Véhicule à moteur comprenant une bande de support selon l'une quelconque des revendications 1 à 29.

31. Procédé de support d'une vitre (12) comprenant le moulage d'une pluralité de pièces non-renforcées de matériau plus dur (19, 42, 54, 75, 84) autour d'un bord périphérique de ladite vitre (12) de façon à ce que la vitre (12) soit reçue dans un canal (21) du matériau plus dur (19, 42, 54, 75, 84), puis le moulage d'un matériau plus tendre (26, 44, 59, 80, 88) au-dessus des surfaces extérieures du matériau plus dur (19, 42, 54, 75, 84), **caractérisé en ce que** l'étape de moulage du matériau plus tendre comprend le moulage d'une seule pièce du matériau plus tendre (26, 44, 59, 80, 88) au-dessus de ladite pluralité de pièces de matériau plus dur (19, 42, 54, 75, 84).

32. Procédé selon la revendication 31 et comprenant de munir une partie du matériau plus dur (19, 42, 54, 75, 84) d'un deuxième canal (22) pour recevoir une deuxième vitre (11).

33. Procédé selon la revendication 31 ou 32 comprenant de former une partie du matériau plus tendre (26, 44, 59, 80, 88) avec au moins une lèvre (48a, 48b, 48c, 49, 50, 60, 61, 62) pour engager un cadre correspondant.

34. Procédé selon l'une quelconque des revendications 31 à 33 et comprenant de former une partie du matériau plus tendre (26, 44, 59, 80, 88) avec au moins un creux (48a, 48b, 48c, 49, 50, 60, 61, 62) pour engager un cadre correspondant.

35. Procédé selon l'une quelconque des revendications 31 à 34 dans lequel le matériau plus dur (19, 42, 54, 75, 84) a une dureté Shore D de 40.

36. Procédé selon l'une quelconque des revendications 31 à 35 dans lequel le matériau plus dur (19, 42, 54, 75, 84) est du polypropylène.

37. Procédé selon l'une quelconque des revendications 31 à 36 dans lequel le matériau plus tendre (26, 44, 59, 80, 88) a une dureté Shore D de 60.

38. Procédé selon l'une quelconque des revendications 31 à 37 dans lequel le matériau plus tendre (26, 44, 59, 80, 88) est un élastomère thermoplastique.

39. Procédé selon l'une quelconque des revendications 31 à 38 dans lequel ladite vitre (12) est une vitre d'un véhicule à moteur.

40. Procédé selon la revendication 39 comprenant une bande de support selon la revendication 27 sachant que la vitre (12) est une vitre de custode montée dans la portière.

41. Procédé selon la revendication 39 comprenant une bande de support selon la revendication 27 sachant que la vitre (12) est fixée dans le corps du véhicule à moteur.

42. Procédé selon la revendication 40 ou 41 et comprenant l'étape supplémentaire de relier la vitre (12) à un corps d'un véhicule à moteur.

43. Procédé selon la revendication 42 dans lequel la vitre (12) est reliée au corps du véhicule à moteur par des membres (48a, 48b, 48c, 49, 50, 60, 61, 62) formés par le matériau plus tendre (26, 44, 59, 80, 88) et engageant le corps.

44. Procédé selon la revendication 43 dans lequel les membres (48a, 48b, 48c, 49, 50, 60, 61, 62) comprennent au moins une lèvre et/ou au moins un creux.

45. Procédé selon la revendication 42 dans lequel la vitre (12) est reliée au corps du véhicule à moteur par des moyens adhésifs agissant entre la vitre et le corps.

46. Procédé selon l'une quelconque des revendications 31 à 45 dans lequel le matériau plus dur (19, 42, 54, 75, 84) et/ou le matériau plus tendre (26, 44, 59, 80, 88) sont formés de PVC.

47. Bande ou procédé selon l'une quelconque des revendications précédentes dans laquelle/lequel le matériau plus tendre (26, 44, 59, 80, 88) est moulé ou lié sur la vitre (12).
